# EUROPEAN PATENT APPLICATION

(11) **EP 3 502 467 A1**
(43) Date of publication of application: **26.06.2019**
(21) Application number: 17209674.5
(22) Date of filing: 21.12.2017
(51) Int. Cl.: F03D 17/00, F03D 1/06

(54) **WIND TURBINE ROTOR BLADE WITH EMBEDDED SENSORS STITCHED TO DRAPABLE PLIES**

(71) Applicant: Siemens Gamesa Renewable Energy A/S, 7330 Brande (DK)
(72) Inventor: Girolamo, Donato, 9400 Nørresundby (DK)
(74) Representative: Aspacher, Karl-Georg

(57) **Abstract**

A rotor blade for a wind turbine including a leading edge section with a leading edge and a trailing edge section with a trailing edge is presented. The leading and the trailing edges divide the outer surface of the rotor blade into suction and pressure sides. The rotor blade further includes a blade shell which defines the shape of the rotor blade. The blade shell has suction and pressure side portions. The rotor blade includes a structural element, such as a spar cap, a web, a root reinforcement part, etc for load carrying and/or reinforcing the rotor blade. The structural element is made of a stack of drapable continuous fiber mats or fabrics, referred to as plies. The structural element has at least one optical fiber embedded therein for monitoring characteristics of the structural element. The optical fiber includes at least one sensor. The optical fiber is stitched onto one of the drapable plies thereby forming a smart ply. Thus, the stack forming the structural element includes one or more smart plies.

## Description

The present invention relates to a rotor blade of a wind turbine. The invention particularly relates to rotor blade of a wind turbine wherein one or several sensors are embedded in a structural member of the rotor blade. The invention furthermore relates to a wind turbine for generating electrical energy comprising such a rotor blade.

Wind turbine blades are typically constructions made of composite materials that, compared to conventional metal constructions, exhibit different failure modes, both in terms of damage initiation and propagation. Damage in a composite structure can be difficult to detect with visual inspections - which is the common practice in industry - and damage can propagate so fast that common inspection schedules do not always guarantee the discovery of the fault prior to catastrophic failure.

The current most common practice for monitoring the structural integrity of a wind turbine blade is through regular inspections that are visually carried out by trained technicians and/or robotic cameras originally developed for pipes inspection. Additional technologies used for remote monitoring of the structural health of composite wind turbine blades are based on the estimation of the fundamental blade frequencies through accelerations measured in the nacelle or in the rotor blade itself. These technologies are usually classified as global since they are based on global characteristics of the blade and are characterized by low sensitivity to damage: only when the structural damage becomes considerably large to affect the global mechanical properties of the structure they become sensitive to the damage.

Sensor technology in wind turbine blades is limited by the risk and effect of lightning strikes: metal-based sensors are usually discarded due to their electrical conductivity that can be fatal to the sensor system in the event of a lightning strike. Alternative sensing technologies are based on optical sensors such as optical fibers with fiber Braggs gratings (FBG) that allow strain measurements. A main challenge in using FBG in large high production volume composite structures is the instrumentation, especially in large structures: it is a delicate, time-consuming, costly, long process with a high failure rate both during and right after installation. These issues are amplified in rough industrial environments and complex manufacturing processes such as the vacuum assisted resin transfer molding (VARTM) process which uses a mold tool with a vacuum bag and vacuum to assist the resin flow. The VARTM process is, for instance, used by Siemens in its well-known Integral Blade manufacturing process.

In consideration of the aforesaid, it is an object of the present invention to provide a technique for monitoring the structural characteristics and/or integrity of a rotor blade of a wind turbine throughout its complete lifetime, from manufacturing to decommissioning of the rotor blade.

This object is achieved by the independent claims. Advantageous modifications and embodiments are disclosed in the dependent claims.

According to the invention, there is provided a rotor blade of a wind turbine, wherein the rotor blade comprises a leading edge section with a leading edge and a trailing edge section with a trailing edge, wherein the leading edge and the trailing edge divide the outer surface of the rotor blade into a suction side and a pressure side. The rotor blade further comprises a blade shell which defines the shape of the rotor blade, wherein the blade shell comprises a suction side portion and a pressure side portion, and a structural element for reinforcing and stiffening the structure of the rotor blade, wherein the structural element is made of a stack of drapable plies of continuous fiber material. Generally such drapable plies are held together to form the structural element such as a spar cap of the rotor blade by infused and cured resin. The rotor blade is characterized in that the structural element comprises at least one optical fiber embedded in the stack of drapable plies of continuous fiber material for monitoring structural characteristics and/or integrity of the structural element, wherein the optical fiber comprises at least one sensor, and the optical fiber (21) is stitched onto one of the drapable plies of the stack.

In other words, the invention proposes a novel system that can be used for structural health monitoring (SHM) of wind turbine rotor blades. The system employs drapable 'smart' plies or mats with sensors stitched onto the drapable plies or mats. It may be noted that the plies are drapable as an intrinsic property of the plies only prior to the resin infusion and curing of the stack of the plies to form the structural element. Once the stack of the drapable plies is resin infused and the resin subsequently cured neither the resulting structural element is drapable nor are the constituent plies of the stack forming the structural element are drapable thereafter. These structures - or structural elements - serve the dual purpose of load carrying and strain sensing along the main stress paths of overall blade components, e.g. spar caps or root section reinforcement parts of the rotor blade. As the one or more sensors is/are optical fiber based, the sensor(s) is/are immune to lightning strikes. In addition, the provision of the sensor(s) can be carried out in a protected environment and can even be carried out completely separate from the typically rough industrial environment where the rotor blade is manufactured. In other words, the plies or mats of continuous fiber material that are generally used to be laid up in the blade mould by hand lay-up or robotic arm lay-up during blade manufacturing by stacking the plies are provided with the optical fibers having the sensors before the laying-up of these plies in the blade mould. The optical fibers are stitched onto one or more of the plies, thereby forming the smart ply or smart plies and then these smart ply or smart plies are laid up in the blade mould and further manufacturing of the blade is performed. The smart ply is the mat or fabric made of continuous fiber material onto which the optical fiber or fibers having the sensor is stitched.

The present invention is in principle applicable to any structural element of the rotor blade. Advantageous applications focus on components which bear a load carrying role and which are prone to stress and strain. Concrete examples thereof are spar caps at the pressure and suction side of the blade shell or so-called root section reinforcement parts, and also the web between the spar caps.

Spar caps are typically connected in an I-beam shape to the web (or "beam" or "spar"), wherein the spar caps basically carry longitudinal loads while the web mostly carries shear load from bending moments.

The root section reinforcement parts are typically inserted into the root section of the laminate of the blade shell and reinforce the heavily loaded root section of the rotor blade. The root section reinforcement parts typically become thinner in a direction away from the root and, thus, "fade out" or merge with the standard fiber-reinforced composite material of the blade shell. Embedding one or more sensors in these root section reinforcement parts is advantageous as these parts are manufactured before laying them out in the mold and can thus be prepared specifically for the purpose of providing means to monitor e.g. the casted laminate quality in a reliable, repetitive and elegant manner.

The fibers of the continuous fiber material plies, hereinafter also referred simply to as plies or fabrics, may in principle comprise any type of fiber. Proven materials used as fibers in the continuous fiber material for wind turbine rotor blades include glass, carbon, aramid and/or basalt fibers. The structural element comprising such smart ply is referred to as 'smart' structural element.

One purpose of the sensor(s) embedded into the structural elements is to monitor the characteristics of the fiber-reinforced plies of the structural element and, thus of the structural element itself and as a consequence, those of the rotor blade that comprises at least one such structural element. This comprises in particular the monitoring of delamination, cracks, in particular transverse cracks, and/or a fracture of the structural element. Note that the presented system has a "dual" working principle: First, if one of the embedded sensors happens to be in the "process zone" of the damage, this will show as a local strain increase at the sensor. Second, if the damage is far away from the sensor(s) (i.e. in another zone of the rotor blade), but affects the global structural response of the blade - especially in terms of flapwise bending moment distribution - this will show in the system as different strain distribution throughout the "smart" structural elements.

A reliable detection of these failures at an early stage is highly advantageous for the owner of a wind turbine, as thus costly service and repair works on the rotor blades can be avoided, or at least planned efficiently beforehand. Additionally, catastrophic failures can be avoided.

Thus, monitoring the structural characteristics and/or integrity of the structural element may include monitoring delamination, cracks, in particular transverse cracks, and/or a fracture of the structural element.

Another purpose of the sensor(s) embedded into the structural elements is to monitor the changes in the strain distribution throughout the structural element which result from the global bending and/or twisting of the rotor blade subject to cyclic aerodynamic and gravitational forces.

The detection of these configurational changes in the rotor blade may, first, also contribute to better calculate and foresee e.g. aging of certain components. Second, however, it is advantageous to have information on changes in the shape such as bending and/or twisting that can be obtained from measured strains through proper calibration, to control and regulate the operation of the wind turbine. For instance, individual pitch control could be improved based on input data which are based on the monitoring of a structural element with an embedded sensor according to this invention.

An additional advantage of the embedded sensor(s) as conceived in the present invention is that the data acquired by the proposed system could be used in aero-structural control paradigms, such as e.g. flutter control.

In an embodiment of the invention, the optical fiber is aligned substantially in lengthwise direction of the rotor blade.

This allows a long distance to monitor - typically dozens of meters for a rotor blade which exceeds fifty meters in length - which basically all new wind turbine rotor blades currently do. In this context, the "lengthwise" direction of the rotor blade is referred to as the direction, or orientation, which extends from the root to the tip of the rotor blade.

Exemplarily, the length of the optical fiber exceeds five per cent, in particular ten per cent, even more particularly twenty percent of the length of the rotor blade. The optical fiber can also go to the tip, turn around and come back to the root such that not only the reflected but also the transmitted light is measurable at the root. If the optical fiber comes back to the root than its length is equal to or more than double the length of the blade.

Regarding the sensor which is embedded in the optical fiber, in principle any fiber optic sensor (FOS) can be used. In practice, a distributed Bragg reflector, in particular a fiber Bragg grating (FBG), constructed in a short segment of the optical fiber has been proven to be a preferred choice, as devised by the inventor. Multiple FBGs may be inserted or formed in the same optical fiber.

In this context, a "short" segment is to be understood as a segment of the optical fiber which has a length which is less than ten per cent of the length of the stitched optical fiber itself. In particular, the segment of the optical fiber may have a length which is even less than five per cent of the length of the stitched optical fiber.

The fiber Bragg grating is to be understood as an arrangement wherein a periodic variation in the refractive index of the core of fiber leads to a wavelength-specific dielectric mirror. The function of the fiber Bragg grating is the detection of a failure or damage in the fiber-reinforced plastic material. Again, if the embedded fiber Bragg grating (FBG) happens to be in the "process zone" of the damage, this will show as a local strain increase at the FBG. If the damage, however, is far away from the FBG, namely in another zone of the rotor blade, but affects the global structural response of the blade, this will show in the system as different strain distribution compared to the pristine one throughout the "smart" structural elements.

In an embodiment of the invention, the optical fiber comprises a plurality of sensors which are distributed lengthwise in the optical fiber.

The advantage of providing a plurality of sensors distributed lengthwise along the optical fiber is that information about the lengthwise position along the optical fiber is provided, if the sensor detects a failure in the fiber-reinforced plies or of the structural element. Descriptively speaking, by providing a plurality of sensors within the optical fiber, it can be determined where, i.e. at which spanwise position, the failure in the structural element occurred. Additionally, a spanwise distribution of sensors allows a high resolution reconstruction the spanwise strain distribution and/or bending response of the rotor blade. Furthermore, another significant advantage is that there is more chance to capture a damage because there are more measurement points and better resolution of the strain distribution. Too few FBG can miss certain damages developing far away from them.

In another embodiment of the invention, the rotor blade comprises a plurality of optical fibers with respective sensors, which are in particular arranged substantially in parallel to each other in the drapable plies.

In yet another embodiment of the invention, in the rotor blade of the wind turbine, the optical fiber extends from root to tip of the blade then turn around, for example with a radius greater than 100mm, and extends from the tip to the root. In this case not only the reflected but also the transmitted light can be measured.

In another embodiment of the invention, the optical fibers are connected to an optical interrogator, which itself is connectable to a programmable logic controller (PLC) of the wind turbine.

The optical interrogator has the purpose to convert the wavelengths reflected by each sensor to mechanical strain values that are transferred to the PLC. A dedicated multiplexing method, integrated in the system, allows to identify the spanwise position of each sensor. Dedicated data post-processing within the PLC determines structural faulty states of the rotor blade and/or accurately determines the position of failure in the structural element if a plurality of sensors is distributed with adequate spatial resolution in the optical fiber.

Exemplarily, the optical interrogator is situated in the root section of the rotor blade or in the hub of the wind turbine.

It may be noted that by stitching the optical fiber onto the drapable plies it is ensured that the optical fiber and the sensor present in the optical fiber are not subjected to harsh manufacturing processes such as pultrusion or weaving etc. The optical fibers can easily be hand-stitched or machine-stitched without straining the optical fibers or pulling on to the optical fiber (as is the case for pultrusion) or by bending the optical fiber in several directions (as is the case for weaving). Furthermore, by stitching the optical fiber having the sensor onto the drapable plies, any drapable ply may be covered to a smart ply. Since the optical fiber is only stitched after the drapable ply has been manufactured, there is no need for modifying the structural design and/or the manufacturing process for the drapable ply to include the optical fibers. Also, since the stitching operation of the optical fiber onto the drapable ply is independent of the manufacturing process of the drapable ply itself, the orientation of the optical fibers with respect to the ply can be easily manipulated and secured. Also, stitching can be undone in parts or completely, and new orientation of the optical fiber with respect to the drapable ply can be easily obtained by realigning and re-stitching the optical fiber onto the drapable ply, as per the requirement of the user. This freedom to control the orientation of the optical fiber may be very helpful.

The invention is finally also related to a wind turbine for generating electricity comprising at least one rotor blade as described above.

The above mentioned attributes and other features and advantages of the present technique and the manner of attaining them will become more apparent and the present technique itself will be better understood by reference to the following description of embodiments of the present technique taken in conjunction with the accompanying drawings, wherein:
- FIG 1: shows a cross-sectional view of a rotor blade of a wind turbine;
- FIG 2: shows a method for manufacturing a conventional spar cap;
- FIG 3: shows a part of a conventional spar cap casted or formed by using conventional plies only;
- FIG 4: shows the conventional spar cap and orientation of the conventional plies that form the conventional spar cap with respect to the blade;
- FIG 5: schematically depicts an exemplary embodiment of a 'smart' ply in accordance with aspects of the present technique;
- FIG 6: schematically depicts another exemplary embodiment of the 'smart' ply depicting an exemplary stitching detail;
- FIG 7: schematically depicts yet another exemplary embodiment of the 'smart' ply depicting a plurality of optical fibers with sensors and sensor terminations or "tails";
- FIG 8: schematically depicts casting or manufacturing of a structural element using smart plies and conventional plies;
- FIG 9: schematically depicts cross-sectional view of a part of the structural element, i.e. a spar cap in example of FIG 9, casted by method of FIG 8;
- FIG 10: schematically shows a top view of a rotor blade with the spar cap of FIG 9 as the structural element having embedded optical fibers according to an exemplary embodiment of the present technique;
- FIG 11: schematically depicts a cross-sectional view of the wind turbine rotor blade of FIG 10;
- FIG 12: schematically shows a rotor blade with the spar cap of FIG 9 and having an optical interrogator connected to the optical fibers of the spar cap;
- FIG 13: schematically shows a root section reinforcement as the structural element with embedded optical fibers according to another exemplary embodiment of the present technique;
- FIG 14: schematically shows a part of the web as the structural element with embedded optical fibers according to yet another exemplary embodiment of the present technique;
- FIG 15: schematically depicts an exemplary embodiment of the smart ply having some sensors of the optical fiber at an angle A with respect to a direction d of the unidirectional fibers of the smart ply; and
- FIG 16: schematically depicts another exemplary embodiment of the smart ply having some sensors of the optical fiber perpendicular to the direction d of the unidirectional fibers of the smart ply; in accordance with the present technique.

Note that the drawings are in schematic form. Furthermore, similar or identical elements may be referenced by the same reference signs.

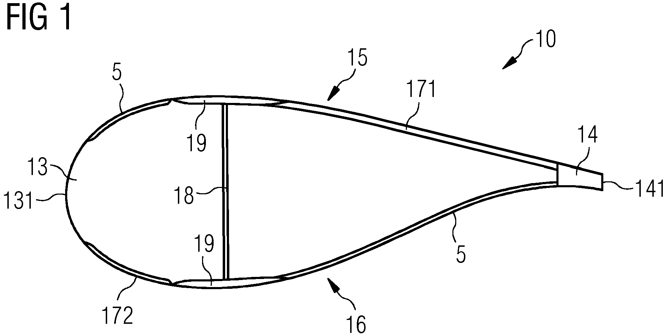

FIG 1 shows a cross-sectional view of a rotor blade 10 of a wind turbine. The rotor blade 10 comprises a leading edge section 13 with a leading edge 131 and, opposite to the leading edge 131, a trailing edge section 14 with a trailing edge 141. The leading edge 131 and the trailing edge 141 divide the outer surface of the rotor blade 10 into a suction side 15 and a pressure side 16. The geometry, i.e. the shape, of the rotor blade 10 is defined by the blade shell 5 of the rotor blade 10. Likewise, the blade shell 5 can be divided into a suction side portion 171 and a pressure side portion 172. In order to guarantee a sufficient strength and stability, there is provided a web 18 which extends between the suction side portion 171 and the pressure side portion 172 of the blade shell. The web 18 typically extends over most of the length of the rotor blade 10, i.e. from the root section to the tip section of the rotor blade. At these portions of the blade shell 5 where the web 18 meets the blade shell 5, the blade shell 5 is reinforced by a spar cap 19. In other words, both the suction side portion 171 and the pressure side portion 172 of the blade shell 5 are reinforced by a structural element or "sub-component", namely the spar cap 19 which is an example of the structural element in the present technique. Other examples of structural element, as used herein for the present technique, are web 18 or the root section (not shown in FIG 1) of the rotor blade 10.

The blade shell 5 is typically configured as a laminate comprising a fiber-reinforced plastic material or fabrics and core materials (e.g. balsa wood, ply-wood, foam). Typically, the fiber-reinforced plastic material or fabrics are relatively thin, typically and depending on the spanwise position only one to ten millimeter thick, while the core may amount to a thickness up to a few centimeters. As can be seen in the schematic illustration of FIG 1, the thickness of the blade shell 5 varies.

First, the thickness of the blade shell 5 may depend on the chordwise position between the leading edge 131 and the trailing 141. Second, the thickness also depends on whether the blade shell 5 is part of the suction side portion 171 or the pressure side portion 172. Another variation in the thickness is based on the position in lengthwise or spanwise direction, i.e. whether the blade shell 5 is closer to the root section or closer to the tip section of the rotor blade 10. In spanwise positions very close to the root of the rotor blade 10, the blade section profile might look considerably different from the one represented in FIG 1 with blade shell 5 thicknesses considerably increasing from what previously specified (up to few centimeters) and shape transitioning from aerodynamic to cylindrical shapes.

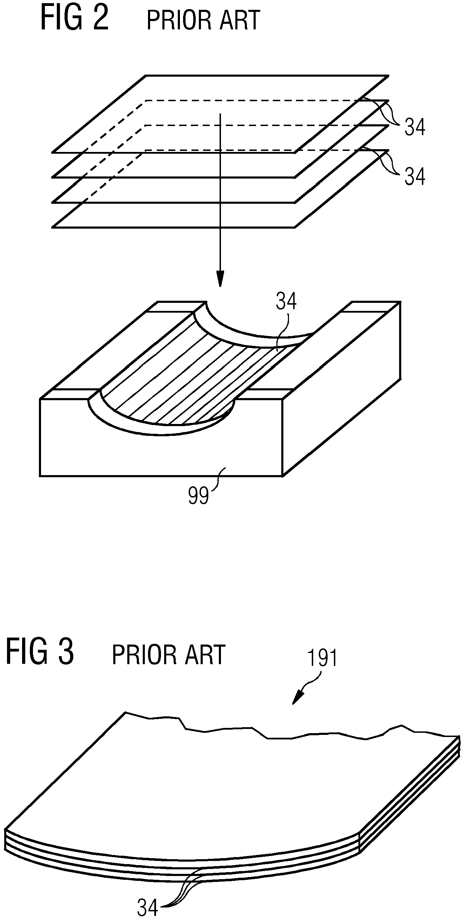

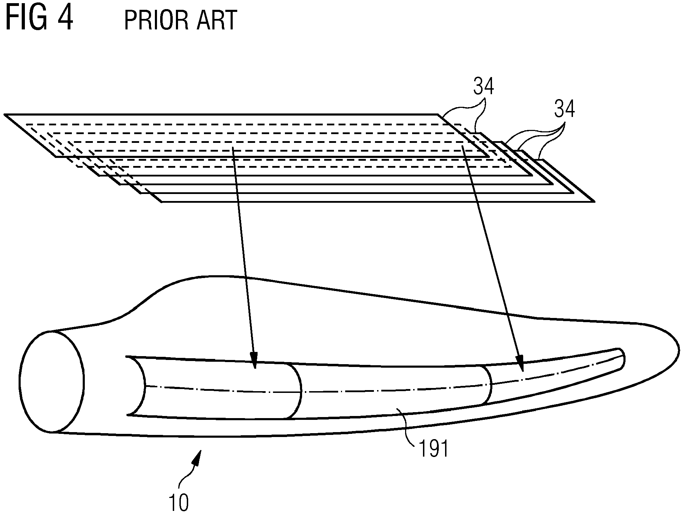

FIG 3 shows a part of a conventionally known spar cap 191 and FIG 2 schematically depicts manufacturing of the conventionally known spar cap 191 of the wind turbine rotor blade 10. FIG 4 shows the conventionally known spar cap 191 as located in the blade 10. The conventional spar cap 191 is manufactured by hand or robotic layup of a number of continuous fiber mats or fabrics, also referred to as plies 34. In the manufacturing of the conventional spar cap 191, one such continuous fiber material ply 34, hereinafter also referred simply to as conventional ply 34, is placed in a blade mould 99 and thereafter additional conventional plies 34 are placed atop each other to form a stack of conventional plies 34. The number of conventional plies 34 placed in the stack so formed depends on the thickness of the spar cap 191 to be achieved. The conventional plies 34 are drapable i.e. the conventional plies 34 can be folded and bent like a fabric or cloth. The plies 34 can have different lengths. These conventional plies 34 are preferably unidirectional fabrics i.e. substantially the reinforcing fibers within the plies 34 run in one direction for example some weavers of unidirectional fabrics, term a fabric with only 75% of its weight in one direction as a unidirectional (UD) fabric, whilst for others the unidirectional designation only applies to those fabrics with more than 90% of the fiber weight in one direction. Alternatively, other plies 34 may not be UD plies, but instead may be bidirectional or omnidirectional mats. The stack of plies 34 is casted, i.e. formed into a desired physical form, to form the spar cap 191 i.e. for example by raisin injection moulding. FIG 4 shows the conventional plies 34 to depict the arrangement of plies 34 in the spar cap 191.

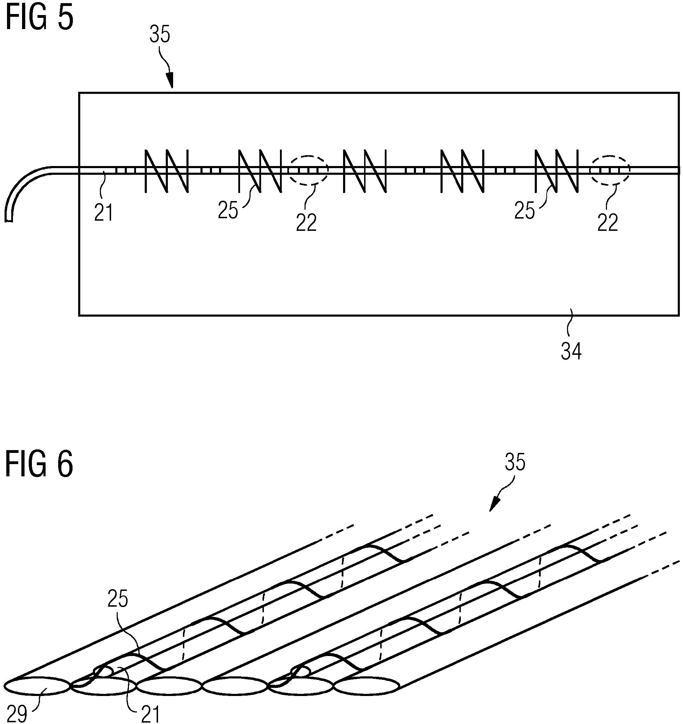

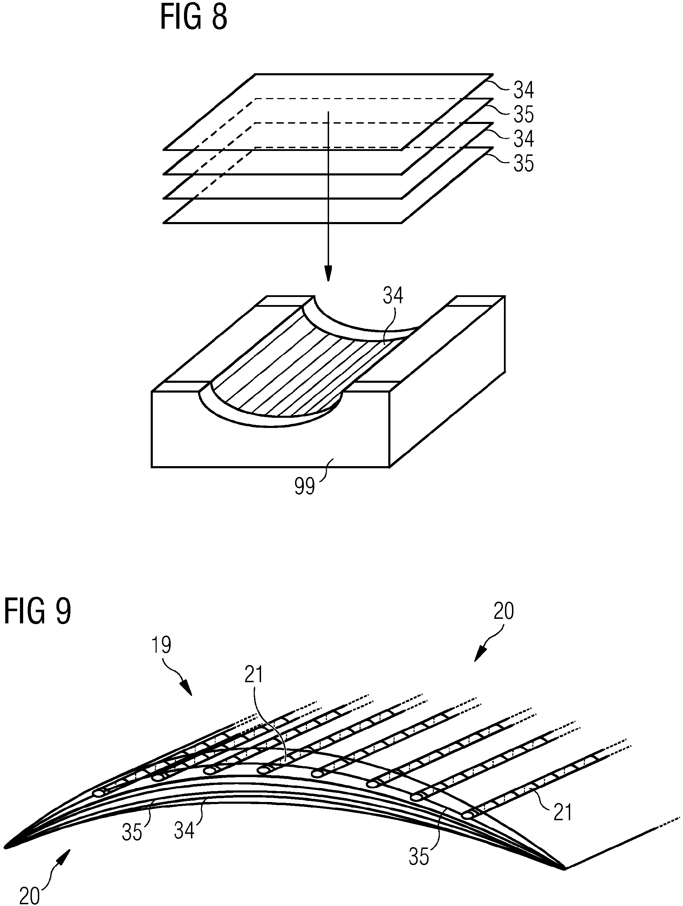

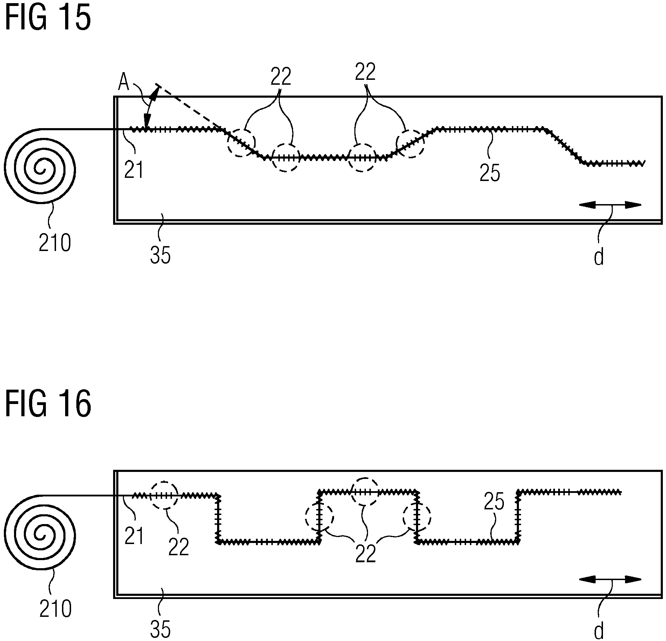

The present technique differs from the conventionally known spar cap 191 and the other aspects described in FIGs 1 to 4, in the use of 'smart ply' 35 or 'smart plies' 35 schematically shown in FIGs 5 and 6, and subsequently in FIGs 15 and 16. The smart ply 35 is made from a conventionally known ply 34 or mat 34 or fabric 34 on which an optical fiber 21 is attached by stitching, depicted by stitches 25. The stitches 25 are formed as a result of sewing manually or by using a robotic arm and thereby affixing the optical fiber 21 to the components of the ply 34, for example to the reinforcing-fiber bundle 29 such as glass-fiber bundle or carbon fiber bundle of the ply 34, and preferably of the unidirectional ply 34 to form the 'smart' unidirectional (UD) ply 35 as shown in FIG 6. The optical fiber 21 includes one or more sensors 22. Such smart plies 35 are used during the manufacturing of the structural element of the present technique, for example during the manufacturing of the spar cap 19 of FIG 1 or the web 18 of FIG 1. One or more such smart plies 35 are used along with other conventional plies 34 in making the spar cap 19 as shown in FIG 8, thus forming the spar cap 19 having the embedded optical fiber 21. FIG 9 schematically depicts a part of the spar cap 19 having the embedded optical fibers 21 resulting from the process of FIG 8. After completing the lay-up of the plies 34, 35 in the mould 99, the spar cap 19 is casted by using resin injection moulding, such as Vacuum Assisted Resin Transfer Molding (VARTM) or Vacuum Injected Molding (VIM).

Thus according to the present technique, the structural element, i.e. in the present example is the spar cap 19, includes a stack of drapable plies 34,35 of continuous fiber material and includes one or more optical fibers 21 embedded in the stack of drapable plies 34,35. One or more of the optical fibers 21 are stitched onto one or more of the drapable plies, i.e. the smart plies 35, of the stack and each optical fiber 21 includes at least one sensor 22. The sensors 22 are used for monitoring structural characteristics and/or integrity of the structural element, i.e. of the spar cap 19 in the present example. The smart plies 35 are formed before the casting of the structural element, i.e. before forming the spar cap 19 in the present example, or in other words before the plies 34,35 are laid-up in the mould 99 of FIG 8 and before the VARTM or VIM is applied.

Note that the position of the optical fiber 21 within the structural element, i.e. the spar cap 19 in the present example, can be predetermined and even a desired pattern of layout or orientations of the sensors 22 can be provided.

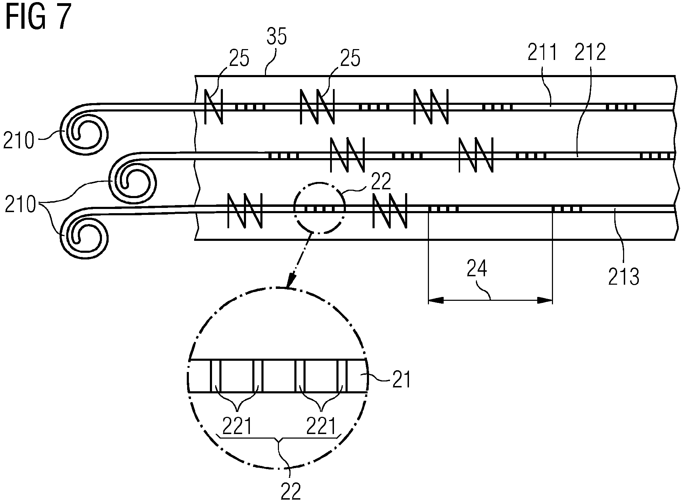

FIG 7 shows an exemplary smart ply 35 that is integrated into the structural element, i.e. the spar cap 19, the web 18, or a root section reinforcement part of the rotor blade 10 and has a plurality of optical fibers 21 with sensors 22. In FIG 7, three optical fibers 21, namely a first optical fiber 211, a second optical fiber 212 and a third optical fiber 213 can be seen. All three optical fibers 211, 212, 213 are arranged substantially parallel to each other. They are also arranged in lengthwise direction of the unidirectional smart plies 35. Each optical fiber 21 is provided with sensors 22 wherein one sensor 22 is shown separately in more detail in FIG 7. Each of the optical fiber 211,212,213 is attached in the smart ply 35 by stitches 25. The stitches 25 fastening the corresponding optical fiber 21 may be spread along the length of the optical fiber 21 so that the optical fiber 21 is arranged in the smart ply 35 in a desired orientation and position. The stitching can be performed using threads for example polyester, nylon, glass, carbon, aramid yarns.

The sensors 22 can exemplarily be designed as fiber Bragg gratings. This means that each sensor 22 comprises a plurality of gratings 221, wherein each grating 221 partially reflects the light in the optical fiber 21. In FIG 7, each sensor 22 consists of four gratings 221. Note that this is an example only. In practice, more than four gratings are common. Also note that the dimensions in FIG 7 are not to scale but are chosen such that schematically the principle and concept of the invention become clear. For example, in practice, the distance between adjacent gratings 221 is typically very small, e.g. in the range of hundreds of nanometers. The sensors 22 are spaced from each other at a predetermined distance 24. These parts of the optical fibers 21 which are outside and which exit the smart ply 35 are referred to as optical fiber tails 210. The optical fiber tails 210 are used to connect the optical fibers 21 with an optical interrogator (not shown in FIG 7).

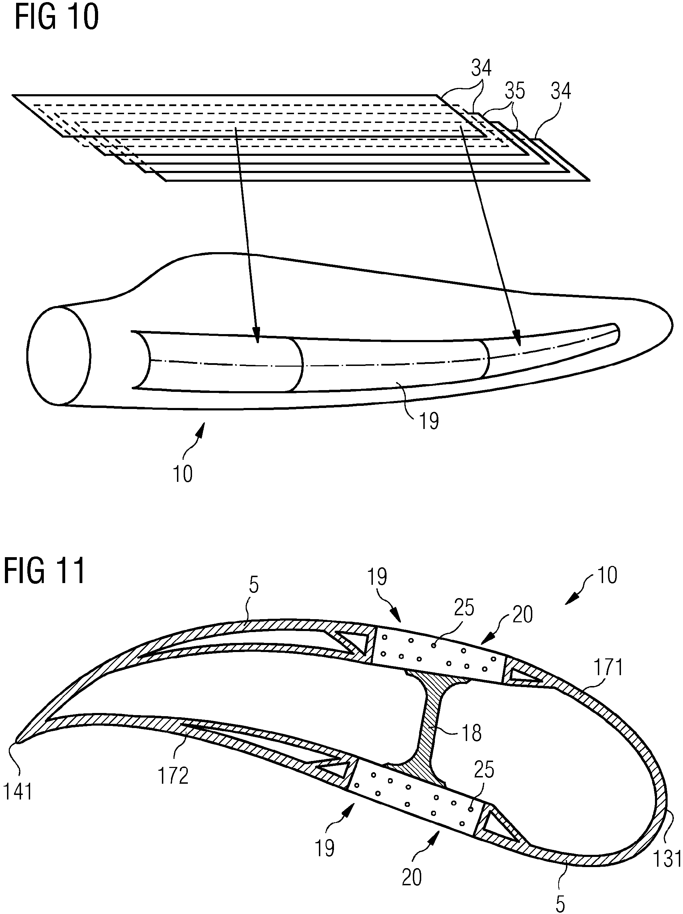

FIG 10 schematically depicts a top view of an exemplary embodiment of the rotor blade 10 having the spar cap 19 of the present technique and FIG 11 schematically shows a cross-sectional view of the rotor blade 10 of FIG 10 of the wind turbine, this time comprising spar caps 19 which are the structural elements 20, according to the invention.

The rotor blade 10 of the present technique includes the leading edge 131 and the trailing edge 141 which divide the blade shell 5 into the suction side portion 171 and the pressure side portion 172. In order to keep the shape and the stability of the blade shell 5 and of the rotor blade as a whole, there is provided the web 18 which extends between the suction side portion 171 and the pressure side portion 172 of the blade shell 5. Where the web 18 meets the blade shell 5, the blade shell is reinforced with the spar caps 19. In the exemplary embodiment of FIGs 10 and 11, each spar cap 19 includes conventional plies 34 and smart plies 35 arranged and formed or casted as a stack and having plurality of optical fibers 21 embedded in the stack and affixed to the smart plies 35 by stitching. It may be noted that in FIG 11, the smart plies 35 or and/or the conventional plies 34 are not visible as they are fused together, for example by impregnating resin for example by VARTM, to form the structural element 20 i.e. the spar cap 19 in the present example.

If the rotor blade 10 is affected by a structural fault, for instance a manufacturing defect and/or material failure, the damage state will most likely influence the strain distribution along the spar caps 19. Depending on the failure mode, damage location and damage size, the spar cap strain diagram will have local strain increase or global changes. Therefore, mapping and monitoring the strain distribution along at least one of the spar caps 19 will allow detection of structural damage and avoid structural collapse. In this context and to achieve this aim, the provision of structural elements 20, i.e. the spar cap 19 with one or more constituent smart ply 35, with embedded sensors 22 is of great importance. The structural elements 20 may well extend over the entire length of the rotor blade 10, i.e. from the root section to the tip section of the rotor blade 10. Alternatively, the one or more of the smart plies 35 may be embedded in the structural elements 20, i.e. the spar cap 19 in the present example, such that the optical fibers 21 start a few meters away from the root of the rotor blade 10 and stop a few meters before the tip of the rotor blade 10. In other words, location and extent of coverage of the rotor blade 10 by the optical fibers 21 can be varied according to the design and desire of the manufacturer.

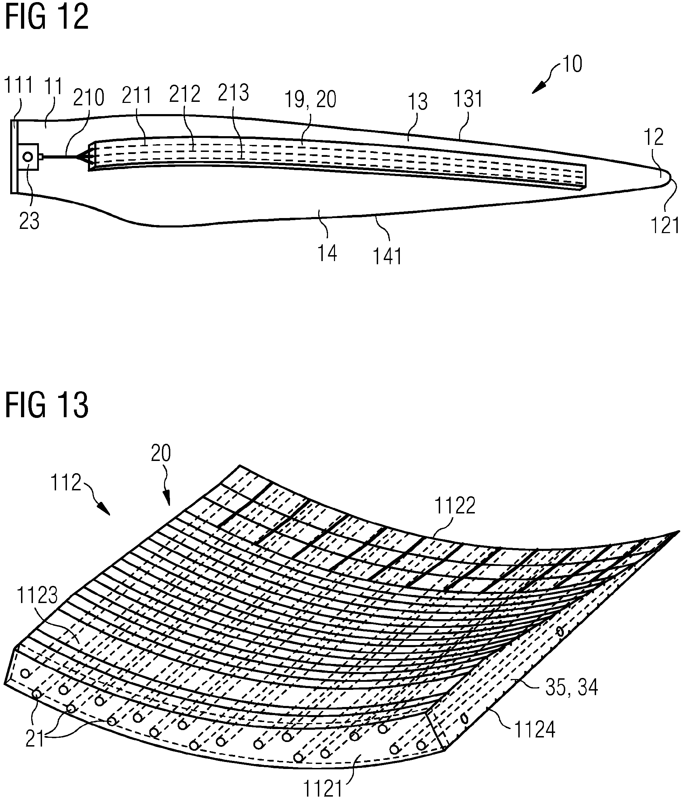

FIG 12 shows a schematic top view on a rotor blade 10 with the spar cap 19 as the structural element 20, wherein the structural element 20 comprises embedded optical fibers 21 of which a first optical fiber 211, a second optical fiber 212 and a third optical fiber 213 are shown in FIG 12. All three optical fiber 211, 212, 213 extend over the entire length of the structural element 20. These optical fibers 211, 212, 213 are arranged basically in parallel to each other. The plurality of optical fibers 211, 212, 213 may simultaneously monitor the strain and load in the structural member 20. Alternatively, the provision of several optical fibers 211, 212, 213 is destined to create redundancy in the structural element 20 and thus maintain the functionality of strain detection in the structural element 20 in the event of failure or damage to one or more of the optical fibers 21. Therefore, if for example, the first and the third optical fibers 211, 213 are damaged and do not work properly for example during the blade manufacturing process, then the second optical fiber 212 is used for monitoring the strain and the load in the structural member 20. Redundancy is also beneficial when one or more optical fibers are interrupted due to structural repair.

FIG 12 also shows an optical interrogator 23 which connects the optical fiber tails 210 with the structural element 20, and more particularly with the smart plies 35 in the structural element 20. The optical interrogator 23 is able to convert wavelengths reflected from the sensor 22 into strains. Together with a programmable logic controller, it is possible to determine the lengthwise or spanwise position or location where a failure in the structural element 20 occurs. Such an optical interrogator 23 is particularly useful if a plurality of sensors 22 is arranged in lengthwise direction in the optical fibers 21. In the example of FIG 12, the optical interrogator 23 is located in the root section 11 of the rotor blade 10.

FIG 13 shows another exemplary embodiment of the structural element 20, namely a root section reinforcement 112, with a plurality of embedded optical fibers 21 according to an exemplary embodiment of the present technique are present. The root section reinforcement 112 is made from a stack of drapable plies 34,35 including one or more of the smart plies 35 that have stitched therein the optical fibers 21 having one or more of the sensors 22. The root section reinforcement 112 comprises a root end 1121, a tip end 1122, an inner side 1123 and an outer side 1124. The root section reinforcement 112 is arranged and prepared to be placed between, i.e. to be "sandwiched", between a fiber layer on its inner end 1123 and between another fiber layer on its outer end 1124. The inner end 1123 is destined to face towards the cavity of the rotor blade 10, in case that the root section reinforcement 112 is integrated in a rotor blade 10, and the outer end 1124 of the root section reinforcement 112 is destined to face towards the outside, i.e. towards the surrounding ambiance, again in case that the root section reinforcement 112 is integrated in a rotor blade 10. Likewise, the root end 1121 of the root section reinforcement 112 faces towards the root of the rotor blade (or even is part of the root) and the tip end 1122 of the root section reinforcement 112 faces towards the tip end of the rotor blade 10.

The function of the root section reinforcement 112 is to structurally reinforce and support the root section of the rotor blade 10, as in that section of the rotor blade 10 particularly high bending moments and loads from mechanical joints to the hub typically occur.

The thickness of the root section reinforcement 112 typically diminishes from its root end 1121 towards its tip end 1122, as it is the case in the exemplary embodiment shown in FIG 10. The root section reinforcement section 112 is made of smart plies 35 and the conventional plies 34. The variable thickness of the root section reinforcement 112 is achieved by varying the number of the plies 34, 35 in the stack at different locations of the root section reinforcement 112.

Compared to conventional root section reinforcements, the root section reinforcement 112 according to one embodiment of the present invention comprises a plurality of optical fibers 21. These optical fibers 21 are arranged substantially in lengthwise direction (i.e. from the root end 1121 to the 1122 or vice versa) and substantially in parallel to each other. A substantial number of optical fibers 21 are provided; first, for reasons of redundancy, and second, for providing a detailed monitoring of the structural health of the root section reinforcement 112 and adjacent components of the rotor blade 10.

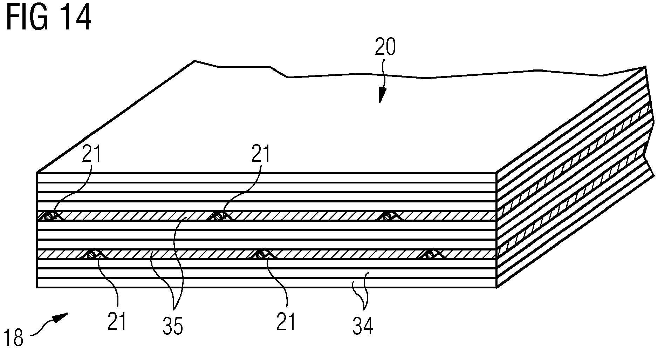

FIG 14 schematically depicts a part of the web 18. The web 18 is the structural element 20 having the stack of conventional and smart plies 34,35. The smart plies 35 are generally sandwiched between the conventional plies 34 as shown in FIG 14. This keeps the optical fibers 21 and the sensors 22 included therein away from the surface of the structural element 20 and surrounded by the resin which was infused into the stack of the plies 34,35 to form the structural element 20. The conventional plies 34 and the resin surrounding the optical fibers 21 protect the optical fibers 21 and the sensors 22 included therein.

FIGs 15 and 16 schematically depict different embodiments of the smart ply 35 having different relative orientations of the sensors 22 with respect to the corresponding plies 35, and particularly with respect to the direction of fibers layout or orientation in the UD plies 35. The direction of orientation of the reinforcing fibers in the UD plies 35 is schematically depicted in FIGs 15 and 16 by the double headed arrow marked with reference numeral 'd'. As shown in FIG 15, the optical fiber 21 is stitched on the ply 35 in such a way that some of the sensors 22 are parallel or aligned with the direction d, whereas some other of the sensors 22 are at an angle A with respect to the direction d. The angle A may be any angle as desired by the manufactured, and for example 15 degree, 30 degree, 45 degree, 60 degree, 75 degree, etc. As shown in the embodiment schematically depicted in FIG 16, the optical fiber 21 is stitched on the ply 35 in such a way that some of the sensors 22 are parallel or aligned with the direction d, whereas some other of the sensors 22 are at perpendicular with respect to the direction d, i.e. 90 degree. The sensors 22, for both FIGs 15 and 16, that are aligned or parallel to the direction d are used to measure or determine strain along the direction d of the plies 35 whereas the sensors 22 that are perpendicular to the direction d are useful to determine the strain perpendicular to the direction d. Similarly, the sensors 22 that are at different angles A are useful to determine the strain in the smart ply 35 along the corresponding angles. It may be noted that the strain measurement along the smart ply 35 is representative of the strain in the structural element 20.

It may be noted that directional terminology, such as 'top', 'bottom', 'front', 'back' etc., is used in FIGs of the present technique with reference to the orientation of the FIG(s) being described. The components of the invention can be positioned in a number of different orientations. As such, the directional terminology is used for purposes of illustration and is in no way limiting.

It may further be noted that all the optical fibers shown in the accompanying figures start at the blade root and terminate at the tip. However, with another optical setup the optical fiber(s) may go from root to tip then turn around with a radius greater than 100mm and come back to the root. In this case not only the reflected but also the transmitted light can be measured.

While the present technique has been described in detail with reference to certain embodiments, it should be appreciated that the present technique is not limited to those precise embodiments. Rather, in view of the present disclosure which describes exemplary modes for practicing the invention, many modifications and variations would present themselves, to those skilled in the art without departing from the scope and spirit of this invention. The scope of the invention is, therefore, indicated by the following claims rather than by the foregoing description. All changes, modifications, and variations coming within the meaning and range of equivalency of the claims are to be considered within their scope.

## Claims

1. A rotor blade (10) of a wind turbine, the rotor blade (10) comprising:
- a leading edge section (13) with a leading edge (131) and a trailing edge section (14) with a trailing edge (141), wherein the leading edge (131) and the trailing edge (141) divide the outer surface of the rotor blade (10) into a suction side (15) and a pressure side (16),
- a blade shell (5) which defines the shape of the rotor blade (10), wherein the blade shell (5) comprises a suction side portion (171) and a pressure side portion (172), and
- a structural element (20) of the rotor blade (10) configured to carry load of the rotor blade (10) and/or to reinforce the rotor blade (10), wherein the structural element (20) comprises a stack of drapable plies (34,35) of continuous fiber material,
**characterized in that**
- the structural element (20) comprises at least an optical fiber (21) embedded in the stack of drapable plies (34,35) for monitoring structural characteristics and/or integrity of the structural element (20), wherein the optical fiber (21) comprises at least one sensor (22) and wherein the optical fiber (21) is stitched onto one of the drapable plies (35) of the stack.

2. The rotor blade (10) according to claim 1, wherein the structural element (20) is at least one of a spar cap (19), a web (18), and a root section reinforcement part (112) of the rotor blade (10)

3. The rotor blade (10) according to claim 1 or 2, wherein the drapable plies (34,35) comprise glass, carbon, aramid and/or basalt fibers.

4. The rotor blade (10) according to any of the claims 1 to 3, wherein one or more of the drapable plies (34,35) are unidirectional.

5. The rotor blade (10) according to any of claims 1 to 4, wherein monitoring the structural characteristics and/or integrity of the structural element (20) includes monitoring delamination, cracks, in particular transverse cracks, and/or a fracture in the structural element (20).

6. The rotor blade (10) according to any of claims 1 to 5, wherein monitoring the structural characteristics and/or integrity of the structural element (20) includes monitoring the strain distribution in the structural element (20) which result from the global bending and/or twisting of the rotor blade (10) subject to cyclic aerodynamic and gravitational forces.

7. The rotor blade (10) according to any of claims 1 to 6, wherein the length of the optical fiber (21) exceeds five per cent, in particular ten per cent, even more particularly twenty percent of the length of the rotor blade (10).

8. The rotor blade (10) according to any of claims 1 to 7, wherein the optical fiber (21) extends from a root section (11) of the rotor blade (10) to a tip section (12) of the rotor blade (10) turns at the tip section (12) and extends from the tip section (12) of the rotor blade (10) to the root section (11) of the rotor blade (10).

9. The rotor blade (10) according to any of claims 1 to 8, wherein the sensor (22) is a distributed Bragg reflector, in particular a fiber Bragg grating, constructed in a short segment of the optical fiber (21).

10. The rotor blade (10) according to any of claims 1 to 9, wherein the optical fiber (21) comprises a plurality of sensors (22), which are distributed lengthwise in the optical fiber (21).

11. The rotor blade (10) according to any of claims 1 to 10, wherein the rotor blade (10) comprises a plurality of optical fibers (21) with respective sensors (22), which are in particular arranged substantially in parallel to each other on the corresponding drapable ply (35).

12. The rotor blade (10) according to claim 11, wherein the plurality of optical fibers (21) are connected to an optical interrogator (23), and wherein the optical interrogator (23) is connectable to a programmable logic controller of the wind turbine.

13. A wind turbine for generating electricity, the wind turbine comprising at least one rotor blade (10) according to any of claims 1 to 12.

14. A method for manufacturing a rotor blade (10) of a wind turbine, the rotor blade (10) comprising a structural element (20) of the rotor blade (10) configured to carry load of the rotor blade (10) and/or to reinforce the rotor blade (10), the method comprising:
- casting the structural element (20) using a plurality of drapable plies (34,35) of continuous fiber material, wherein at least one drapable ply (35) includes at least one optical fiber (21) having at least one sensor (22) and wherein the optical fiber (21) is stitched onto the drapable ply (35).

15. A method for monitoring structural characteristics and/or integrity of a structural element (20) of a rotor blade (10) of a wind turbine, wherein the rotor blade (10) is according to any of claims 1 to 11, the method comprising:
- determining strain distribution along the structural element (20) by monitoring a bending of the optical fiber (21), and
- comparing the determined strain distribution with a reference strain distribution of the structural element (20).

16. A method for generating input data for controlling a wind turbine with at least one rotor blade (10), in particular via individual pitch control of the rotor blade (10), wherein the rotor blade (10) is according to any of claims 1 to 11, the method comprising:
- determining the bending and/or twisting of the rotor blade (10) via the sensor (22) of the embedded optical fiber (21), and
- providing the determined values of the bending and/or twisting of the rotor blade (10) to a controller of the wind turbine.
